# EUROPEAN PATENT SPECIFICATION

(11) **EP 3 296 180 B1**
(45) Date of publication and mention of the grant of the patent: **08.07.2020**
(21) Application number: 15891868.0
(22) Date of filing: 14.05.2015
(51) Int. Cl.: B61H 13/20, B60T 13/66, B60T 17/22

(54) **ROLLING STOCK**
ROLLMATERIAL
MATÉRIEL ROULANT

(43) Date of publication of application: 21.03.2018
(73) Proprietor: Hitachi, Ltd., Tokyo 100-8280 (JP)
(72) Inventor: SAWADA, Kento, Tokyo 100-8280 (JP); FURUKAWA, Kazuhiko, Tokyo 100-8280 (JP); KONISHI, Kenta, Tokyo 100-8280 (JP); KOREISHI, Kazuto, Tokyo 100-8280 (JP); SONO, Makoto, Tokyo 100-8280 (JP); NAKAYAMA, Kaname, Tokyo 100-8280 (JP)
(74) Representative: Mewburn Ellis LLP
(86) International application number: PCT/JP2015/063859
(87) International publication number: WO 2016/181544

(56) References cited:
- JP-A- 2012 245 949
- JP-B2- 2 576 834
- US-B1- 6 663 193

## Description

### Technical Field

The present invention relates to a train (electric railroad car) that is compatible with an autonomous drive mode in which the train runs by using electric power obtained from an overhead line or a third rail in an electrified route and a traction mode in which the train is pulled by a locomotive in a non-electrified route.

### Background Art

Conventionally, it has been desired that, in a case where a locomotive pulls a railroad car in which passengers ride (hereinafter, description will be made by referring to a railroad car including an electric railroad car and a passenger car as "pulled car" in some cases.), brake force of the locomotive and brake force of the pulled car be matched to restrain an uncomfortable shock in a front-back direction from occurring at the time of braking and restrain a braking distance from being increased due to non-matching of brake force.

In order to match the brake force of the locomotive and the brake force of the pulled car, a brake translating device for translating a brake command from the locomotive is mounted on the pulled car in some cases. Specifically, the brake translating device that has connected a brake pipe pressure (brake command) of the locomotive to the brake translating device and has received brake force of the locomotive calculates (translates) the brake pipe pressure of the locomotive as brake force matching the pulled car and thereafter transmits the brake force to a brake control device of the pulled car as an electric signal.

For example, PTL 1 discloses a brake translating device mounted on a pulled car coupled to a locomotive. Normally, a brake control device for controlling a brake device provided in each pulled car is mounted on the car, and those brake control devices are connected to a brake command line disposed through all the pulled cars. Normally, a brake command from a brake handle in a driver's seat is transmitted to each brake control device through this brake command line.

In a case where the pulled car is pulled by the locomotive and is driven without passengers, the brake translating device is loaded into the pulled car (normally, a first car including a driver's seat) to which the locomotive is coupled. A brake pipe (air pipe) for inputting a brake command of the locomotive to the brake translating device and a transmission line for outputting a brake command (electric signal) obtained by translating the input brake command of the locomotive to the brake command line of the pulled car are connected to the brake translating device loaded into the pulled car.
PTL 2 discloses a relay based accelerated brake pipe application and release system having an electronic control module.

### Citation List

### Patent Literature(s)

PTL 1: JP-A-2003-19955
PTL 2: US 6663193 B1

### Summary of Invention

### Technical Problem(s)

However, the brake translating device disclosed in PTL 1 is not a device that is constantly provided in the pulled car, and therefore, in a situation in which, for example, a train is pulled by a locomotive due to a malfunction of the car or the like, it is necessary to carry the brake translating device to the malfunctioning train and load the brake translating device into the malfunctioning train. Therefore, it is problematic in that, for example, it is difficult to quickly transfer the malfunctioning car to a storage track or the like that does not obstruct operation of other cars. Further, there is desired a train that, in a case where a pulled car is pulled by a locomotive, can switch an autonomous drive mode and a traction mode with a simpler configuration, without preparing a brake translating device for translating a brake command from the locomotive and transmitting the brake command to the pulled car or other devices.

The invention has been made in view of the above points and proposes a train that transmits a brake command of a locomotive to a brake control device of a pulled car with a low-cost simple configuration.

### Solution to Problem(s)

In order to solve the above problems, in the invention, a train according to claim 1 is provided.

### Advantageous Effects of Invention

According to the invention, it is possible to provide a train that can transmit a brake command of a locomotive to a brake control device of a pulled car with a low-cost simple configuration.

### Brief Description of Drawings

Fig. 1 is a schematic diagram of a railroad car according to an embodiment of the invention in a normal autonomous drive mode.
Fig. 2 is an air piping system diagram of the railroad car according to the same embodiment in the normal autonomous drive mode.
Fig. 3 is a schematic diagram in a traction mode in which the railroad car according to the same embodiment is pulled by a locomotive.
Fig. 4 is an air piping system diagram in a traction mode in which the railroad car according to the same embodiment is pulled by a locomotive.

### Description of Embodiments

Hereinafter, an embodiment of the invention will be described in detail with reference to the drawings.

A railroad car 1 according to the invention has two drive modes, i.e., an autonomous drive mode and a traction mode. The autonomous drive mode is a mode in which, in an electrified route, the railroad car drives by itself by using electric power from an overhead line 2 via a power collection device 4 or electric power from a third rail provided along a track. The autonomous drive mode also includes a case where the railroad car runs by using electric power generated by a generator unit 24 mounted on the railroad car 1. Meanwhile, the traction mode is a mode in which the railroad car runs while being pulled by a locomotive mainly in a non-electrified route. Note that, although the traction mode is mainly a case where the railroad car runs in the non-electrified route, the drive mode becomes the traction mode in the electrified route in some cases.

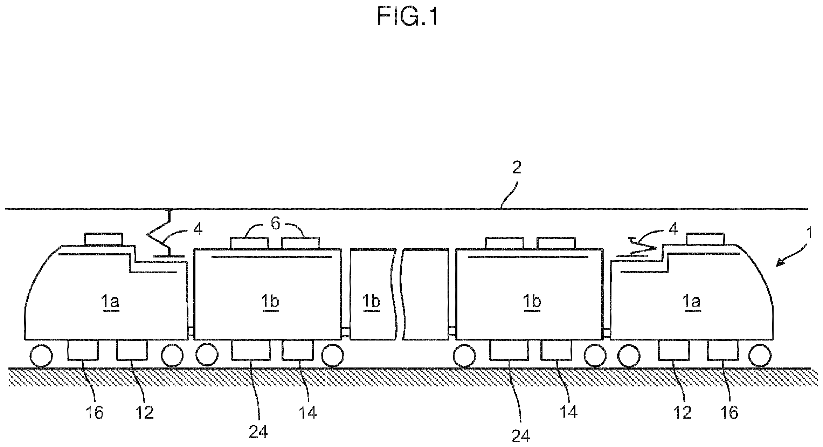

Fig. 1 is a schematic diagram of the railroad car in a normal autonomous drive mode. As illustrated in Fig. 1, the railroad car 1 is made up of first cars 1a including a driver's seat and a plurality of intermediate cars 1b coupled between both the first cars 1a.

The power collection device 4 for obtaining electric power from the overhead line 2 and an air conditioner 6 for supplying conditioned air to a passenger room are mounted on a roof of the first car 1a. An auxiliary power supply device for supplying electric power to service devices such as broadcast equipment and the air conditioner 6, a main transformer 12 for converting a voltage of electric power obtained from the overhead line 2, an air compressor 16 for generating compressed air to be supplied to a door and a brake cylinder 70 which are operated by an air pressure, an air tank 18 (not illustrated), a brake control device 40 (not illustrated), and the like are provided under a floor of the first car 1a.

The air conditioner 6 is provided on a roof of the intermediate car 1b, and the generator unit 24 for operating a generator by using output of an internal-combustion engine to thereby generate electric power, a main converter 14 for driving a main motor mounted on a bogie by controlling a voltage and a frequency of electric power from the overhead line 2 or electric power generated in the generator unit 24, a brake control device 41 (not illustrated), and the like are provided under a floor thereof.

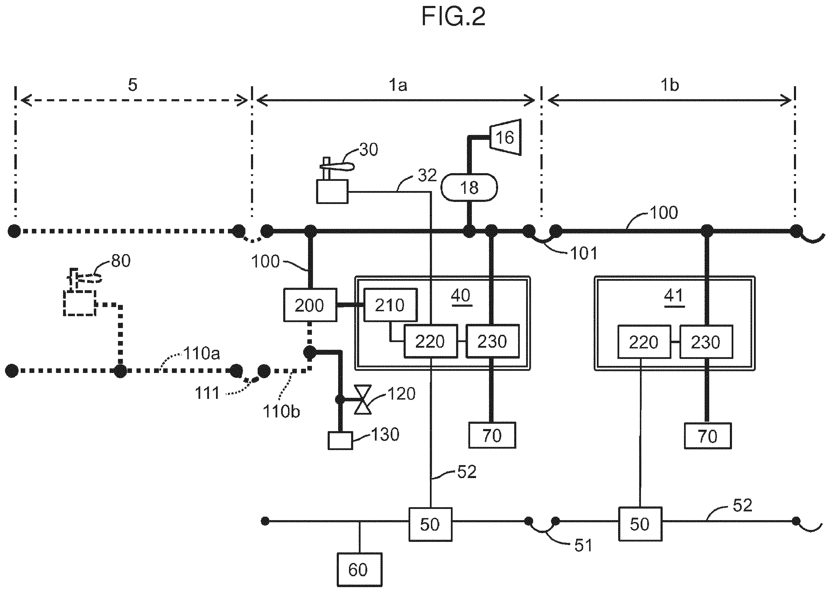

Fig. 2 is an air piping system diagram of the railroad car in the normal autonomous drive mode. All the cars including the first cars 1a and the intermediate cars 1b constituting the railroad car 1 include air pipes 100. The air pipes 100 of the respective cars are connected by a connecting pipe 101 at a coupling portion between the car and the car, and the air pipes 100 are disposed through all the cars from both the first cars 1a to the intermediate cars 1b.

The air compressor 16 and the air tank 18 are connected to the air pipe 100, and the air pipe 100 is filled with predetermined compressed air. The compressed air with which this air pipe 100 is filled is supplied to devices that are operated by using compressed air, such as the brake cylinder 70, an air spring (not illustrated), and a side sliding door (not illustrated) . Note that the air pipe 100 is referred to as "main reservoir pipe (MR pipe)" or the like in some cases. Although not illustrated, a pressure switch is connected to the air pipe 100. When an air pressure of the air pipe 100 becomes equal to or lower than a predetermined pressure, the pressure switch starts the air compressor 16, and therefore the air pressure of the air pipe 100 is maintained at a predetermined pressure.

Each of the brake control devices 40 and 41 for controlling a brake of each car is connected to the air pipe 100 via air piping. The brake cylinder 70 is connected to each of the brake control devices 40 and 41 via the air piping. Each of the brake control devices 40 and 41 includes a communication unit 220 for receiving a brake command and a control unit 230 for controlling brake force of the brake cylinder 70 on the basis of the communication unit 220. The brake control device 40 provided in the first car 1a includes not only the communication unit 220 and the control unit 230 but also a pneumatic-to-electric transducer 210 for transducing an air pressure to an electric signal that is in proportion to the pressure.

A brake handle (brake valve) 30 provided in the driver's seat of the first car 1a and the communication unit 220 included in the brake control device 40 are connected by a transmission line 32 for transmitting a brake command from the brake handle 30 to the communication unit 220. The communication units 220 of the brake control devices 40 and 41 are connected by a transmission line 52 that is disposed through the whole length of the railroad car 1.

A train information management device 50 for collectively managing powering and a brake command of the railroad car 1, operation control of the generator unit 24 and the air conditioner 6, an in-car guide display device, and the like is mounted on each of the railroad car 1, and those train information management devices 50 are connected by the transmission line 52. A monitor device 60 connected to the transmission line 52 is provided in a crew's room of the first cars 1a or some intermediate cars 1b. A crew can obtain information such as an operation state of each of the above-described devices and the pressure of the air pipe 100 via a display screen of the monitor device 60.

A three-way valve (three-way switching cock) 200 for selecting one of two input sides and outputting air to a single output side is connected to the air pipe 100 of the first car 1a via the air piping. One of the two input sides connected to the three-way valve 200 is the air pipe 100, and the other one of the two input sides is a brake pipe 110b for transmitting a brake command of a locomotive 5 to the pneumatic-to-electric transducer 210 in the traction mode. The output side of the three-way valve 200 is connected to the pneumatic-to-electric transducer 210 included in the brake control device 40.

The three-way valve 200 has a contact for outputting information of the selected input side. Based on output of this contact, the crew can check which air pressure, an air pressure of the air pipe 100 or an air pressure of the brake pipe 110b, the pneumatic-to-electric transducer 210 transduces via the train information management device 50. Further, in the autonomous drive mode, the three-way valve 200 connects the air pipe 100 to the pneumatic-to-electric transducer 210, and output of the pneumatic-to-electric transducer 210 (pressure information of the air pipe 100) is displayed on the monitor device 60 via the transmission line 52 and the train information management device 50 and is monitored.

The pneumatic-to-electric transducer 210 includes a pair of (two) converters connected in parallel, and malfunction of the pneumatic-to-electric transducer 210 is mutually detected by comparing and referring to output (pressure values) of the converters. In a case where malfunction of the pneumatic-to-electric transducer 210 is detected, this malfunction information is displayed on the monitor device 60 through the transmission line 52 via the train information management device 50, and therefore the crew is notified.

Note that the pneumatic-to-electric transducer 210 is not necessarily included in the brake control device 40. Instead, common brake control devices 41 may be arranged in the cars (first car 1a, intermediate car 1b) constituting the railroad car 1 and the pneumatic-to-electric transducer 210 may be provided only in the first car 1a, and this pneumatic-to-electric transducer 210 and the communication units 220 included in the brake control devices 41 may be electrically connected. With this configuration, it is only necessary to prepare the brake control device 41 (one type), and therefore it is possible to reduce a cost regarding the brake control device 41 including, for example, preparation of spare parts.

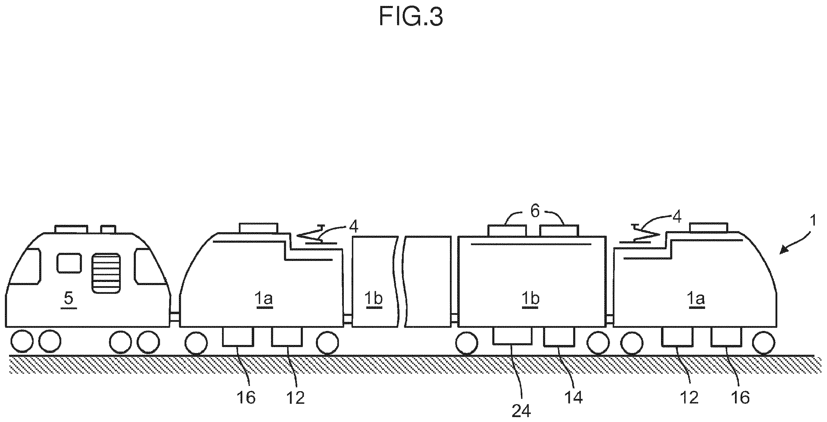

Fig. 3 is a schematic diagram in the traction mode in which the railroad car is pulled by the locomotive. For example, in a case where the railroad car 1 directly runs from the electrified route to the non-electrified route or the railroad car 1 malfunctions, the railroad car 1 lowers the power collection devices 4 and runs while being pulled by the locomotive 5. In the traction mode, the railroad car 1 (pulled car) operates the generator unit 24 to obtain service electric power of the air conditioner 6, lighting, and the like.

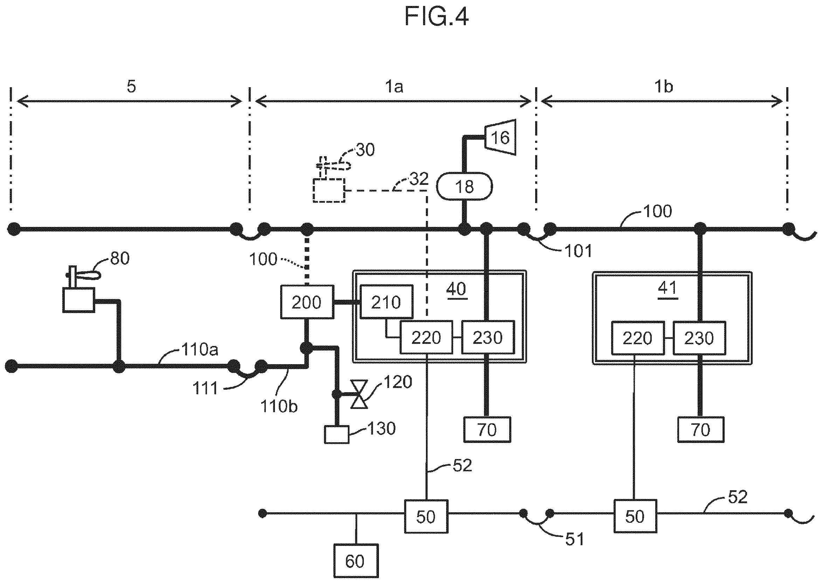

Fig. 4 is an air piping system diagram in the traction mode in which the railroad car is pulled by the locomotive. In the traction mode, the locomotive 5 is coupled to the railroad car 1 (first car 1a and pulled car 1b), and a brake pipe 110a provided in the locomotive 5 and the brake pipe 110b provided in the first car 1a are connected by a connecting pipe 111. Further, the air pipe 100 of the locomotive 5 and the air pipe 100 of the first car 1a are connected by the connecting pipe 101. A brake handle (brake valve) 80 is connected to the brake pipe 110a of the locomotive 5. A pressure switch 130 and an electromagnetic valve 120 are provided to the brake pipe 110b of the first car 1a and can therefore open a pressure of the brake pipe 110b as necessary.

Next, there will be described an effect obtained by transmitting a brake command from the brake handle to the brake control device 40 in the autonomous drive mode and the traction mode.

In the autonomous drive mode illustrated in Fig. 1 and Fig. 2, the air pipe 100 is selected as the input side of the three-way valve 200. Input of the pressure of the air pipe 100 to the three-way valve 200 is transmitted to the train information management device 50 by the contact provided together with the three-way valve 200, and the pneumatic-to-electric transducer 210 monitors the pressure of the air pipe 100.

When the brake handle 30 included in the crew's room of the first car 1a is operated, a brake command of the brake handle 30 is transmitted to the communication unit 220 in the brake control device 40 through the transmission line 32. The brake command transmitted to the communication unit 220 is transmitted to the communication unit 220 in the brake control device 41 of the intermediate car 1b through the transmission line 52 (train information management device 50). The control unit 230 to which the brake command has been transmitted from the communication unit 220 supplies compressed air based on the brake command to the brake cylinder 70 through the air pipe 100, and therefore the whole railroad car 1 can obtain matched brake force.

Meanwhile, in the traction mode illustrated in Fig. 3 and Fig. 4, the brake pipe 110b is selected as the input side of the three-way valve 200. Input of a pressure of the brake pipe 110b to the three-way valve 200 is transmitted to the train information management device 50 by the contact provided together with the three-way valve 200.

When the brake handle 80 of the locomotive 5 is operated, a brake command is transmitted due to a change in pressure of the brake pipe 110a. This brake command is transmitted to the brake pipe 110b via the connecting pipe 111. Although not illustrated, the brake pipe 110a of the locomotive 5 is connected to a brake control device mounted on the locomotive 5, and the locomotive 5 obtains brake force based on the brake command.

The brake command transmitted from the brake pipe 110a to the three-way valve 200 via the connecting pipe 111 is transmitted to the pneumatic-to-electric transducer 210, and the pneumatic-to-electric transducer 210 transduces a brake command caused by a change in pressure of the brake pipe 110b into an electric signal and transmits the electric signal to the communication unit 220.

The communication unit 220 that has received the brake command transduced into the electric signal transmits the brake command to the control unit 230 of the first car 1a and also transmits the brake command to the communication unit 220 of the intermediate car 1b through the transmission line 52 (train information management device 50). The control unit 230 to which the brake command has been transmitted from the communication unit 220 supplies compressed air based on the brake command to the brake cylinder 70 through the air pipe 100, and therefore the whole railroad car 1 can obtain matched brake force. In other words, the locomotive 5 and the railroad car 1 can obtain matched brake force by operation of the brake handle 80.

With this configuration, in this embodiment, a traction control device (traction device module) for transmitting a brake command of the locomotive 5 to the railroad car 1 in the traction mode does not need to be newly mounted on the first car 1a, and therefore it is possible to provide a railroad car capable of transmitting a brake command of a locomotive to a brake control device of a pulled car with a low-cost simple configuration.

Further, the railroad car 1 can obtain brake force based on a brake command of the locomotive 5, and therefore, even in a case where the railroad car 1 is pulled by the locomotive 5, the whole composition made up of the locomotive 5 and the railroad car 1 can obtain matched brake force. With this, it is possible to suppress a shock in a front-back direction caused by brake operation and comfortably ride in the railroad car.

Meanwhile, the brake translating device disclosed in PTL 1 includes two pairs of components constituting the brake translating device, thereby improving redundancy (normality) so that, even when a pair of components malfunctions, brake translation can be implemented by using the other pair of components.

In the train according to the invention, the three-way valve 200 and the pneumatic-to-electric transducer 210 are connected, and therefore an operation state of the pneumatic-to-electric transducer 210 is constantly monitored in both the autonomous drive mode and the traction mode. Thus, it is possible to constantly check normality of the pneumatic-to-electric transducer 210.

According to the invention, for example, in a case where the pneumatic-to-electric transducer malfunctions in the autonomous drive mode, it is possible to avoid, with less components, a state in which the mode transitions to the traction mode without noticing this malfunction of the pneumatic-to-electric transducer 210 and a brake command of the locomotive is not normally transmitted to a brake device of the pulled car.

Further, the pneumatic-to-electric transducer 210 is made up of a pair of (two) converters connected in parallel, and therefore the converters are mutually cross-checked in both the modes. With this, it is possible to constantly monitor normality of the pneumatic-to-electric transducer 210 and improve reliability and safety.

### Reference Signs List

- 1: railroad car
- 1a: first car
- 1b: intermediate car
- 2: overhead line
- 4: power collection device
- 5: locomotive
- 6: air conditioner
- 12: main transformer
- 14: main converter
- 16: air compressor
- 18: air tank
- 24: generator unit
- 30: brake handle (first car)
- 32: transmission line
- 40, 41: brake control device
- 50: train information management device
- 51: connecting line (electric wire)
- 52: transmission line
- 60: monitor device
- 70: brake cylinder (bogie)
- 80: brake handle (locomotive)
- 100: air pipe (MRP) of railroad car
- 101: connecting pipe (air pipe)
- 110a: brake pipe of locomotive
- 110b: brake pipe of railroad car
- 111: connecting pipe (brake pipe)
- 120: electromagnetic valve (for opening brake pipe)
- 130: pressure switch
- 200: three-way valve (three-way switching cock)
- 210: pneumatic-to-electric transducer
- 220: communication unit
- 230: control unit

## Claims

1. A train comprising
a first air pipe (100) disposed through the whole train,
a second air pipe (110a, 110b) for transmitting a brake command of a traction car (5), and
a brake control device (40, 41) for controlling a brake (70) of the train, **characterized by**
the train further comprising a three-way valve (200) having two inputs and an output, whereby the valve selects one of the two inputs and outputs air to the output, wherein the first air pipe connects to the first input, the second air pipe connects to the second input, and a pneumatic-to-electric transducer (210) that is included in the brake control device and is for transducing an air pressure to an electric signal connects to the output, wherein
in a case where the train drives itself using electric power, the pneumatic-to-electric transducer (210) transduces an air pressure of the first air pipe (100) into an electric signal, and
in a case where the train is pulled by the traction car, the pneumatic-to-electric transducer (210) transduces an air pressure of the second air pipe (110a, 110b) into an electric signal.

2. The train according to claim 1, wherein:
the train includes a plurality of cars;
the brake control devices (40, 41) are mounted on the plurality of cars; and
the brake control devices (40, 41) are connected to each other by a transmission line for transmitting a brake command.

3. The train according to claim 2, wherein:
the three-way valve (200) includes an electrical contact for indicating that one of the first air pipe (100) and the second air pipe (110a, 110b) is selected;
a signal of the electrical contact is output to the transmission line; and
the signal of the electrical contact output to the transmission line is displayed on a display device (60) provided in the car.

## Patentansprüche

1. Zug, der Folgendes umfasst:
eine erste Luftleitung (100), die durch den gesamten Zug hindurch angeordnet ist;
eine zweite Luftleitung (110a, 110b) zum Übertragen eines Bremsbefehls eines Traktionswagens (5) und
eine Bremssteuerungsvorrichtung (40, 41) zur Steuerung einer Bremse (70) des Zuges, **dadurch gekennzeichnet, dass**
der Zug ferner ein Dreiwegeventil (200) mit zwei Eingängen und einem Ausgang umfasst, wobei das Ventil einen der zwei Eingänge auswählt und Luft an den Ausgang ausgibt, wobei die erste Luftleitung mit dem ersten Eingang verbunden ist, die zweite Luftleitung mit dem zweiten Eingang verbunden ist und ein Pneumatik-Elektrik-Wandler (210), der in der Bremssteuerungsvorrichtung umfasst ist und zum Umwandeln eines Luftdrucks in ein elektrisches Signal vorgesehen ist, mit dem Ausgang verbunden ist, wobei
in einem Fall, in dem sich der Zug unter Verwendung von elektrischer Energie selbst antreibt, der Pneumatik-Elektrik-Wandler (210) einen Luftdruck der ersten Luftleitung (100) in ein elektrisches Signal umwandelt und
in einem Fall, in dem der Zug durch den Traktionswagen gezogen wird, der Pneumatik-Elektrik-Wandler (210) einen Luftdruck der zweiten Luftleitung (110a, 110b) in ein elektrisches Signal umwandelt.

2. Zug nach Anspruch 1, wobei
der Zug eine Vielzahl von Waggons umfasst;
die Bremssteuerungsvorrichtungen (40, 41) an der Vielzahl von Waggons befestigt sind; und
die Bremssteuerungsvorrichtungen (40, 41) durch eine Übertragungsleitung zum Übertragen eines Bremsbefehls miteinander verbunden sind.

3. Zug nach Anspruch 2, wobei
das Dreiwegeventil (200) einen elektrischen Kontakt umfasst, um anzuzeigen, dass eine aus der ersten Luftleitung (100) und der zweiten Luftleitung (110a, 110b) ausgewählt ist;
das Signal des elektrischen Kontakts an die Übertragungsleitung ausgegeben wird; und
das Signal des elektrischen Kontakts, das an die Übertragungsleitung ausgegeben wurde, auf einer Anzeigevorrichtung (60), die in dem Waggon bereitgestellt ist, angezeigt wird.

## Revendications

1. Train comprenant
un premier tuyau d'air (100) disposé à travers l'ensemble du train,
un second tuyau d'air (110a, 110b) pour transmettre une instruction de freinage d'une voiture de traction (5), et
un dispositif de commande de frein (40, 41) pour commander un frein (70) du train, **caractérisé par**
le train comprenant en outre une vanne à trois voies (200) ayant deux entrées et une sortie, de telle sorte que la vanne sélectionne l'une des deux entrées et délivre en sortie de l'air vers la sortie, dans lequel le premier tuyau d'air se raccorde à la première entrée, le deuxième tuyau d'air se raccorde à la deuxième entrée, et un transducteur pneumatique-électrique (210) qui est inclus dans le dispositif de commande de frein et sert à convertit une pression d'air en un signal électrique se raccorde à la sortie, dans lequel
dans un cas où le train se conduit lui-même en utilisant de l'énergie électrique, le transducteur pneumatique-électrique (210) convertit une pression d'air du premier tuyau d'air (100) en un signal électrique, et
dans un cas où le train est tiré par la voiture de traction, le transducteur pneumatique-électrique (210) convertit une pression d'air du second tuyau d'air (110a, 110b) en un signal électrique.

2. Train selon la revendication 1, dans lequel :
le train comprend une pluralité de voitures ;
les dispositifs de commande de frein (40, 41) sont montés sur la pluralité de voitures ; et
les dispositifs de commande de frein (40, 41) sont raccordés les uns aux autres par une ligne de transmission pour transmettre une commande de freinage.

3. Train selon la revendication 2, dans lequel :
la vanne à trois voies (200) comprend un contact électrique pour indiquer que l'un du premier tuyau d'air (100) et du second tuyau d'air (110a, 110b) est sélectionné ;
un signal du contact électrique est délivré en sortie vers la ligne de transmission ; et
le signal de la sortie de contact électrique vers la ligne de transmission est affiché sur un dispositif d'affichage (60) prévu dans la voiture.
